# NEUE EUROPÄISCHE PATENTSCHRIFT

(11) **EP 2 831 457 B2**
(45) Veröffentlichungstag und Bekanntmachung des Hinweises auf die Entscheidung über den Einspruch: **27.01.2021**
(45) Hinweis auf die Patenterteilung: 05.07.2017
(21) Anmeldenummer: 13711392.4
(22) Anmeldetag: 22.03.2013
(51) Int. Cl.: F16D 65/097

(54) **BREMSBELAGANORDNUNG FÜR EINE SCHIEBESATTEL-SCHEIBENBREMSE**
BRAKE LINING ASSEMBLY FOR A FLOATING-CALIPER DISK BRAKE
ENSEMBLE GARNITURE DE FREIN POUR UN FREIN À DISQUE À ÉTRIER COULISSANT

(30) Priorität: 26.03.2012 DE 102012006094
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: ASEN, Alexander, 94428 Eichendorf (DE); FRICKE, Jens, 94474 Vilshofen (DE); IRASCHKO, Johann, 85301 Schweitenkirchen (DE); PESCHEL, Michael, 82296 Schöngeising (DE); STOEGER, Christian, 94474 Vilshofen (DE)
(74) Vertreter: Kleine, Hubertus
(86) Internationale Anmeldenummer: PCT/EP2013/056026
(87) Internationale Veröffentlichungsnummer: WO 2013/143993

(56) Entgegenhaltungen:
- DE-A1- 10 007 354
- DE-A1-102006 051 964
- DE-A1-102010 023 143
- DE-U1- 9 010 012
- JP-A- H08 128 475
- US-A- 4 498 564
- US-A- 4 573 554

## Beschreibung

Die vorliegende Erfindung betrifft eine Bremsbelaganordnung für eine Schiebesattel Scheibenbremse nach dem Oberbegriff des Anspruchs 1 bzw. 2.

Zur Standartausrüstung schwerer Nutzfahrzeuge gehört mittlerweile die pneumatisch betätigte Scheibenbremse. Da der Zuspannmechanismus von pneumatisch betätigten Scheibenbremsen relativ viel Bauraum beansprucht und der felgenseitige Bauraum stark limitiert ist, hat sich die sogenannte Schiebesattel-Scheibenbremse als bevorzugte Bauart etabliert.

Derartige Scheibenbremsen bestehen im wesentlichem aus drei Funktionseinheiten, dem Sattel, dem Bremsträger und den Bremsbelägen.

Der Sattel hat die Aufgabe die Zuspannkraft zum Andrücken der Bremsbeläge an die Bremsscheibe bereitzustellen. Der Bremsträger hat im wesentlichem die Aufgabe die Abstützkräfte der Bremsbeläge aufzunehmen und die Kräfte an die Fahrzeugachse weiterzuleiten. Die Bremsbeläge dienen dagegen zur Erzeugung der für den Bremsvorgang notwendigen Reibkraft.

Damit der Bremsbelag beim Bremsvorgang in Richtung Bremsscheibe verschoben werden kann, ist es erforderlich, den Bremsbelag im Bremsträgerschacht spielbehaftet zu führen bzw. zu lagern. Aufgrund dieser Gegebenheit ist es erforderlich den Bremsbelag, zur Vermeidung von Klappergeräuschen mittels sogenannten Belagfederanordnungen mit einer oder mehreren Belaghaltefedern vorzuspannen. In der Regel werden diese Federn zwischen Bremssattel (bzw. zwischen einem daran befestigten Haltebügel) und dem jeweiligen Bremsbelag eingebaut. Die Federkraft wirkt somit in gleicher Weise auf die Bremsbeläge als auch auf den Bremssattel bzw. dessen Lagerung. Die Belaghaltefedern bewirken damit einerseits eine Vorspannkraft an den Bremsbelägen, andererseits aber auch eine Verspannung der Sattellagerung.

Zur Vermeidung von sogenannten Restschleifmomenten ist es wichtig, dass die Beläge im nicht betätigten Zustand der Bremse keinerlei Restkraft zur Bremsscheibe hin aufweisen. Durch eine, wie vorher beschrieben, verspannte Sattellagerung wird das vollkommene Lösen des reaktionsseitigen Bremsbelags jedoch beeinträchtigt.

Daneben wird das Gleitverhalten bzw. Rückstellverhalten des Bremssattels natürlich auch durch die konstruktive Auslegung der Sattellagerung beeinflusst. Eine wichtige Einflussgröße ist hierbei die sogenannte Führungslänge. Damit das Verschieben des Bremssattels ohne Verkantungsneigung möglich ist, sollte die Sattellagerung eine gewisse Mindestführungslänge aufweisen: In der Regel ist jedoch der verfügbare Bauraum im Fahrzeug nicht ausreichend um dieser Anforderung im vollem Umfang gerecht zu werden.

Mittels einer optimierten Belagführung und Belagfederung soll das Rückstellverhalten des reaktionsseitigen Bremsbelags und das Gleitverhalten des Schiebesattels verbessert werden. Der reäktionsseitige Bremsbelag sollte möglichst mit Hilfe einer aktiven Rückstellung von der Bremsscheibe weggezogen werden.

Bremsbelaganordnungen des Standes der Technik zeigen die DE 10 2009 006 285 A1, die DE 2 230 949 OS und die US 4 573 554 A. Bremsbelaganordnungen der gattungsgemäßen Art sind zudem aus der DE 90 10 012.3 und der DE 10 2006 051 964 A1 bekannt, wobei in diesem Stand der Technik u.a. eine Niederhaltefeder für einen Bremsbelag offenbart ist, die aus Draht gebogen wird.

Vor dem Hintergrund dieser Lösungen besteht dennoch weiter der Bedarf nach einer funktionsoptimierten kostengünstigen Bremsbelaganordnung.

Die Schaffung dieser optimierten Bremsbelaganordnung bzw. die Schaffung eines entsprechenden optimierten Bremsbelages sind die Aufgaben der Erfindung.

Die Erfindung löst diese Aufgabe durch den Gegenstand des Anspruchs 1 bzw. des Anspruchs 2. Vorteilhafte Ausgestaltungen der Erfindung sind in den Unteransprüchen angegeben.

Vorzugsweise weist die Belagfederanordnung eine oder mehrere einzelne Belagfedern auf.

Die Verspannung des Bremsbelags erfolgt dabei zwischen Bremsträger und Bremsbelag. Die Sattellagerung wird damit nicht mehr durch Reaktionskräfte aus der Belagfederung verspannt. Das Rückstellverhalten des Bremssattels kann damit deutlich verbessert werden.

Ein weiterer positiver Einfluss ergibt sich aus der speziellen Lagerung des reaktionsseitigen Bremsbelags im Bremsträger und der Anbindung des Bremsbelags an den Bremssattel. Der Bremsbelag wird an der Einlaufseite im Bremsträgen durch eine spezielle Formgebung in radialer Richtung fixiert und zusätzlich mittels Verbindungselemente z. B. zylindrische Bolzen mit dem Sattelrücken drehfest verbunden.

Da der Sattel dadurch über den Bremsbelag nun auch außen (reaktionsseitig) geführt ist, ergibt sich für die Sattellagerung eine deutlich größere Führungslänge. Da die beiden inneren Sattellager (Fest- und Loslager) dadurch entlastet werden, besteht die Möglichkeit diese Lager zu verkleinern und im Hinblick auf dem Bauraumbedarf günstigere Bedingungen zu erlangen.

Durch die in Anspruch 1, 2 und den weiteren Unteransprüchen spezifizierte und weitergebildete besondere Formgebung der Belaghaltefedern ergibt sich u.a. eine aktive Rückstellkraft für den reaktionsseitigen Bremsbelag. Um dies besonders vorteilhaft zu erreichen, werden die Federschenkeln nach einer Variante mit ihren scharfkantigen Enden gegen die Flächen des Belagträgerschachts gedrückt.

Beim Zuspannen, also beim Verschieben des Belags in Richtung Bremsscheibe, kommt es dadurch zu einer elastischen Verformung der Federschenkel und infolge, zu einer der Belagverschiebung entgegenwirkenden Federkraft. Die Verformung der Federschenkel ist durch eine entsprechende Gestaltung an der Sattelkontur und am Belagträgerblech eingeschränkt. Beim Lösen der Bremse wird sich die Feder innerhalb des definierten Federwegs entspannen und somit den Bremsbelag von der Bremsscheibe wegziehen. Da sich die Federschenkel reibschlüssig abstützen, kann sich die Feder im Belagträgerschacht entsprechend dem Verschleißzustand des Bremsbelags positionieren.

Nach den weiteren Unteransprüchen ist die Belaghaltefeder einteilig oder zweiteilig ausgeführt, im zweiten Beispiel ist eine einteilige Variante dargestellt, es sind aber auch mehrteilige Ausführungen denkbar.

Im dargestellten Beispiel besteht die Feder aus einem runden Federdraht, andere Federquerschnitte sind ebenfalls möglich.

Vorzugsweise weist jedenfalls der reaktionsseitige Bremsbelag eine Führungsnase auf. Grundsätzlich kann der Bremsbelag auch an beiden Seiten eine Führungsnase aufweisen. Für die "Führungsnasen" sind auch andere Formgebungen denkbar. Es können sowohl konvexe wie auch konkave Formen zur Anwendung kommen. Vorzugsweise erfolgt die Fixierung des Bremsbelags am Bremssattel mit Hilfe von zylindrischen Bolzen. Es können auch andere Sicherungselement verwendet werden wie z.B. Schrauben, Splinte etc..

Statt des Bremsbelags kann in ähnlicher Weise auch ein anderes Bauteil am Bremsbelag wie eine Führungsplatte, Zwischenplatte, Adapterplatte, Bremssattel etc. geführt werden. Die Führungsplatte oder Zwischenplatte oder Adapterplatte wird insofern im Rahmen dieser Anmeldung als Teil der Rückenplatte des Bremsbelages angesehen.

Ausführungsbeispiele einer erfindungsgemäßen Bremsbelaganordnung sind in den Zeichnungen dargestellt und werden im Folgenden näher beschrieben.

Es zeigen:
- Figur 1:: eine räumliche Darstellung einer Ausführungsvariante einer erfindungsgemäßen Bremsbelaganordnung mit zwei Belagfedern;
- Figur 2:: eine Vorderansicht der Ausführungsvariante einer erfindungsgemäßen Bremsbelaganordnung nach Fig. 1, mit entspannten Belagfedern;
- Figur 3A:: eine räumliche Explosionsdarstellung der Ausführungsvariante einer erfindungsgemäßen Bremsbelaganordnung nach Fig. 1, mit zur besseren Darstellbarkeit teilweise freigeschnittenem Bremssattel, die die Montage einer Belagfeder zeigt;
- Figur 3B:: eine räumliche Explosionsdarstellung der Ausführungsvariante einer erfindungsgemäßen Bremsbelaganordnung nach Fig. 1, mit zur besseren Darstellbarkeit teilweise freigeschnittenem Bremssattel, die die Montage einer zweiten Belagfeder zeigt;
- Figur 4:: eine Vorderansicht der Ausführungsvariante einer erfindungsgemäßen Bremsbelaganordnung nach Fig. 1, mit montierten Belagfedern und eingezeichneten Federkräften bei vorgegebener Drehrichtung der Bremsscheibe;
- Figur 5:: ein vergrößerter Ausschnitt einer Draufsicht der Ausführungsvariante einer erfindungsgemäßen Bremsbelaganordnung nach Fig. 1, mit montierten Belagfedern und eingezeichneten Federkräften bei vorgegebener Drehrichtung der Bremsscheibe nach Fig. 4;
- Figur 6:: eine Vorderansicht einer Ausführungsvariante einer erfindungsgemäßen Bremsbelaganordnung mit einer Belagfeder;
- Figur 7:: eine Vorderansicht der Ausführungsvariante einer erfindungsgemäßen Bremsbelaganordnung nach Fig. 6, mit entspannter Belagfeder;
- Figur 8:: eine räumliche Darstellung der Belagfeder der Ausführungsvariante einer erfindungsgemäßen Bremsbelaganordnung nach Fig. 6;
- Figur 9:: eine räumliche Darstellung der Ausführungsvariante einer erfindungsgemäßen Bremsbelaganordnung nach Fig. 6 im montierten Zustand;
- Figur 10:: eine räumliche Darstellung der Ausführungsvariante einer erfindungsgemäßen Bremsbelaganordnung nach Fig. 6 im montierten Zustand, mit zur besseren Darstellbarkeit teilweise freigeschnittenem Bremssattel.

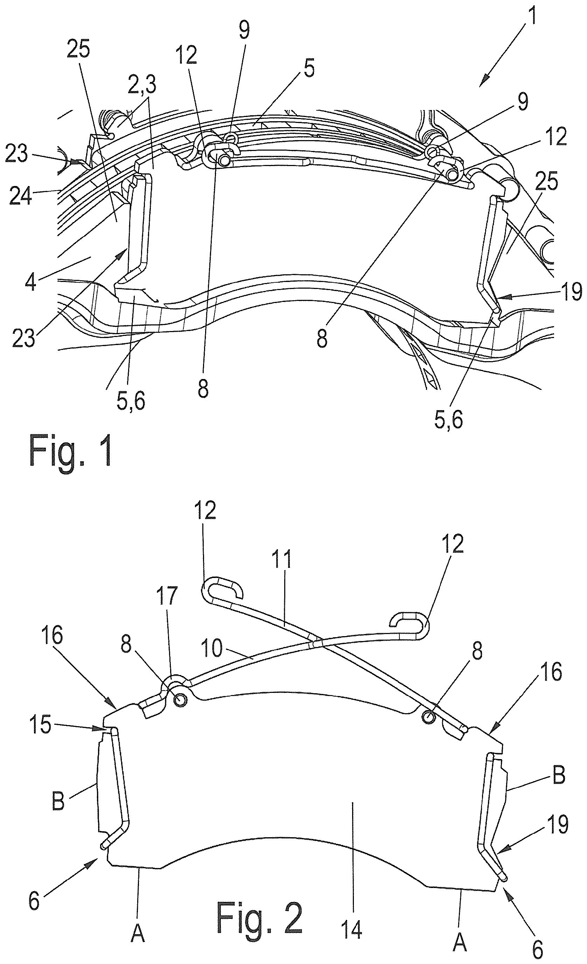

Fig. 1 zeigt eine räumliche Darstellung einer Ausführungsvariante einer erfindungsgemäßen Bremsbelaganordnung einer Schiebesattel-Scheibenbremse 1 mit einem Bremsträger 4 und einem relativ dazu an einem Loslager und einem Festlager (hier nicht zu erkennen) verschieblichen Bremssattel 7. Der Bremssattel weist eine hier nicht dargestellte Zuspanneinrichtung auf, die auf einer Seite einer Bremsscheibe 24 im Bremssattel aufgenommen ist (hier nicht zu erkennen).

Ein zuspannseitiger und ein reaktionsseitiger Bremsbelag 2, 3 sind jeweils in Bremsbelagaufnahmeschächte 23 eines Bremsträger 4 eingesetzt, die hier beidseits einer sich während der Fahrt eines Fahrzeugs drehenden Bremsscheibe im Bremsträger 4 ausgebildet sind. Jeder Bremsbelag weist eine Rückenplatte auf, auf welche ein Belagmaterial aufgebracht ist. Die weiteren Ausführungen in Bezug auf den Bremsbelag und dessen Federn beziehen sich insofern auf die Rückenplatte des reaktionsseitigen Bremsbelages, so dass die Begriffe Bremsbelag und Trägerplatte in Hinsicht auf die Anordnung der Belagfeder(n) synonym verwendet werden, auch wird eine Zwischenplatte oder dgl. ggf. der Träger-/Rückenplatte und dem Bremsbelag zugerechnet, so dass auch insoweit die Begriffe synonym verwendet werden. Denn die beschriebene Belagfeder könnte auch an einer Zwischenplatte angeordnet werden, die auf die Rückenplatte wirkt und beispielsweise an dieser befestigt ist.

Zur Führung der Bremsbeläge 2, 3 weist der Bremsbelagaufnahmeschacht 23 jeweils eine zur den Bremsbelägen 2, 3 zumindest abschnittsweise konturkongruente Geometrie auf, so dass die Bremsbeläge 2, 3 im Bremsträger 4 jedenfalls weitgehend formschlüssig im Bremsträger 4 geführt werden.

Der reaktionsseitige Bremsbelag 3 weist eine Unterseite auf, an welcher er an Stützflächen A im Bremsbelagschacht aufliegt und Drehmomentabstützflächen B in Umfangsrichtung zur Abstützung im Bremsbelagschacht bei Bremsungen in Vorwärts- bzw. Rückwärtsfahrt.

In den "unteren" Eckbereichen 5 des Bremsbelagaufnahmeschachtes 23 auf der Reaktionsseite springt der Bremsbelag 3 jeweils zurück, so dass sich zwischen Bremsbelagschachtwandung und dem Bremsbelag 3 hier jeweils eine Ausnehmung 6 im Bremsbelag ergibt.

Zur Anbindung jedenfalls des reaktionsseitigen "äußeren" Bremsbelags an den Bremssattel 7 (nicht dargestellt) dienen Sicherungselemente, hier Sicherungsbolzen 8, die in Löcher des Bremssattels eingreifen. Die Sicherungsbolzen 8 sind hier vorteilhaft mit einem Federstecker 9 gegen Herausziehen gesichert sind.

Die Geometrie der Sicherungsbolzen 8 ist dabei lediglich als rein beispielhaft zu sehen. Andere Geometrien, die zur Führung des Bremsbelags 2, 3 geeignet sind und die sich verdrehsicher montieren lassen, sind für eine erfindungsgemäße Bremsbelaganordnung für eine Schiebesattelbremse ebenso möglich.

Eine oder hier zwei Belagfedern 10, 11, welche u.a. auch vorteilhaft sind, um ein Klappern des Bremsbelages 2, 3 auf Grund von Spiels zu vermeiden, umgreifen die Sicherungsbolzen 8 jeweils mit einer Öse 12.

Die runde Querschnittsgeometrie der Belagfedern 10, 11 ist dabei lediglich als rein beispielhaft zu sehen. Andere Geometrien, die zur Ausbildung der Belagfedern geeignet sind, sind für eine erfindungsgemäße Bremsbelaganordnung für eine Schiebesattelbremse ebenso möglich.

In Fig. 2 ist der Verlauf der Belagfedern 10, 11 am äußeren Bremsbelag 3 erkennbar.

Die Belagfeder 10 taucht mit ihrem einen freien Ende 13 jeweils eine der Ausnehmungen 6 des Bremsbelages 3 ein.

Durch eine Biegung wird der Konturverlauf der Belagfeder 10 auf die freie Seite der Trägerplatte 14 des Bremsbelages 2, 3 schräg nach oben geführt und durch eine weitere Biegung entlang der Bremsmomentabstützflächen B (bei Vorwärts- bzw. Rückwärtsfahrt) weiter nach oben zur offenen Seite des im wesentlichen jeweils u-förmigen Belagschachtes geführt.

An oberen Ende der Bremsmomentabstützfläche B ist die jeweilige Belagfeder 10, 11 hier vorteilhaft und einfach durch eine Ausnehmung 15 in der Trägerplatte 14 geführt, umgreift eine hakenförmige Geometrie 16 der Trägerplatte 14, um dann wieder auf die freie Seite der Trägerplatte 14 geführt zu sein.

Im weiteren Konturverlauf überwölbt die Belagfeder 10 den Sicherungsbolzen 8 mit einem Bogen 17. Durch eine Kröpfung verläuft die Kontur der Belagfeder 10 beabstandet zur freien Seite der Trägerplatte 14, so dass sie im montierten Zustand nicht im Bereich der Symmetrieachse der Trägerplatte mit der Belagfeder 11 kollidiert. Das andere freie Ende der Belagfeder 10 endet im montierten Zustand der Belagfeder in einer Öse 12, die im montierten Zustand der Belagfeder 10 den Sicherungsbolzen 8 umgreift.

Die Geometrie der Belagfeder 11 verläuft im Wesentlichen symmetrisch zum Konturzug der Belagfeder 11. Jedoch ohne den Bogen 17, so dass eine Überwölbung des Sicherungsbolzens 8 nicht erforderlich ist.

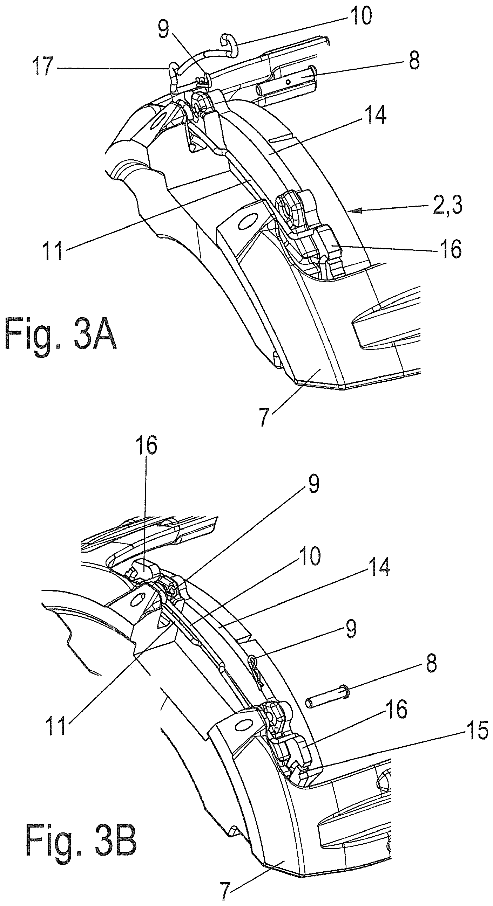

In Fig. 3A bzw. 3B ist der weitere Montagevorgang der Belagfedern 10, 11 verdeutlicht.

Der Verzicht des Bogens im Konturverlauf der Belagfeder gibt die Montagereihenfolge der Belagfedern 10, 11 vorteilhaft vor. Zunächst ist die Belagfeder 11 zu montieren, wobei bei der Montage darauf zu achten ist, das die Belagfeder 11 unter der Bohrung für den Sicherungsbolzen 8 der Öse 12 der Belagfeder 10 entlang geführt wird.

Der Sicherungsbolzen 8 wird dann durch die Öse 12 gesteckt und mit einem Federstecker 9 gesichert, so dass die Belagfeder 11 auf Vorspannung gehalten wird. Die Belagfeder 10 wird nun über ihre Öse 12 auf dem Sicherungsbolzen 8 auf der rechten Seite gelegt, wobei der Sicherungsbolzen 8 ebenfalls durch einen Federstecker 9 gesichert wird.

Die Belagfeder 10 wird so ebenfalls auf Vorspannung gehalten. Ein separater Spannbügel, der beide Belagfedern vorspannt, ist somit nicht mehr nötig. Die Sicherungsbolzen 9 hat dabei eine Zusatzfunktion, er dient auch zum Anbinden des äußeren Bremsbelags 3 an den Bremssattel 7.

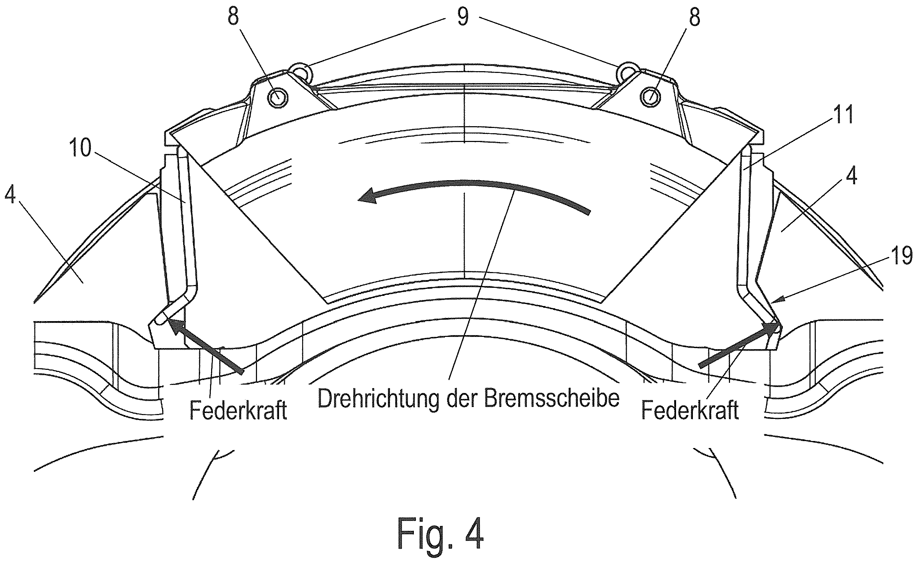

In Fig. 4 sind die Federkräfte der montierten Belagfedern 10, 11 bezogen auf den Bremsträger bei vorgegebener Drehrichtung der Bremsscheibe eingezeichnet. Die Reibkraft an der Kontaktstelle zwischen Belagfeder 10, 11 und Bremsträger 4 bewirkt eine elastische Verformung des Schenkels der Belagfeder 10, 11, die in die Ausnehmung 6 eintauchen und sich bei eingezeichneter Drehrichtung der Bremsscheibe am Bremsbelagschacht des Bremsträgers 4 bzw. am Bremsbelag 2, 3 abstützt, beim Verschieben des Bremsbelags 3 in Richtung Bremsscheibe.

Beim Lösen der Bremse bewirkt diese gespeicherte Federkraft einen Rückstellvorgang am Bremsbelag, so dass der Bremsbelag 3 keinerlei Restkraft zur Bremsscheibe hin aufweist.

Üblicherweise wirken Belaghaltefedern nach dem Stand der Technik gleichermaßen auf die Bremsbeläge 2, 3 und auf den Bremssattel 7, bzw. auf die Führung des bzw. der Druckstücke im Bremssattel 7.

Die Belagfedern 10, 11 bewirken somit einerseits eine Vorspannung des Bremsbelages 2, 3, aber auch eine Verspannung der Führung im Bremssattel 7.

Die Verspannung wird darüber hinaus durch die asymmetrische Gestaltung des Belagschachtes für den reaktionsseitigen Bremsbelages 3 begünstigt. Während eines Bremsvorgangs in Vorwärtsrichtung wird der Bremsbelag 3 gegen die in der Fig. 2 linke Bremsmomentabstützfläche B gedrückt.

Das linke Ende der Belagfeder 10 wird dadurch zwischen Bremsbelag 3 und Bremsbelagschacht eingeklemmt.

Durch die spielbehaftete Passung zwischen Bremsbelag 3 und Bremsbelagschacht würde ohne entsprechende geometrische Maßnahmen am Bremsträger das rechte Ende der Belagfeder 11 entspannt, so dass die Funktion der Belagfeder 11 aufgegeben würde.

Damit dies nicht passiert, ist die rechte Bremsmomentabstützfläche B (an welcher der Belag bei einer Rückwärtsfahrt bei einer Bremsung zur Anlage kommt) in Fig.2 mit einem Hinterschnitt 19 versehen, durch den die Vorspannung der Belagfeder 11 auch während eines Bremsvorgangs aufrecht gehalten wird, da das rechte Ende der Belagfeder 11 durch den Hinterschnitt 19 auch bei Vergrößerung des Spiels sicher zwischen Bremsbelag 3 und Bremsbelagschacht gehalten wird und so auch die Belagfeder 11 sicher eine Federkraft während eines Bremsvorgangs erzeugen kann. Auch ist das rechte Bremsträgerhorn 25 an dieser Seite nicht parallel zur Fläche B ausgerichtet sondern winklig dazu.

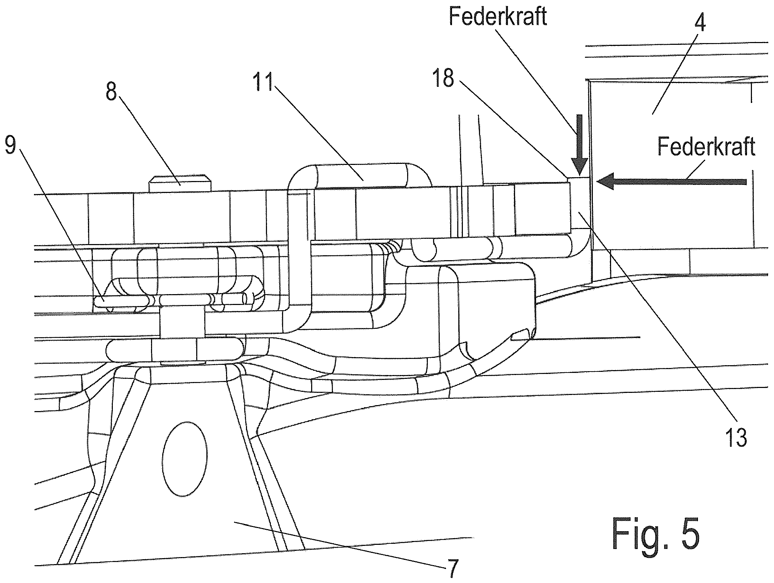

In Fig. 5 sind die zerlegten Federkräfte der montierten Belagfedern 10, 11 bezogen auf den Bremsträger bei vorgegebener Drehrichtung der Bremsscheibe eingezeichnet.

Fig. 5 zeigt insbesondere das scharfkantige Ende 18 der Belagfeder 11, durch das die Reibung zwischen der Belagfeder 11 und der Bremsbelagschachtwandung des Bremsträgers 4 erhöht wird. Darüber hinaus ist dargestellt, wie durch die besondere Geometrie der Belagfedern 10, 11 der äußere Bremsbelag 3 mit dem Bremssattel 7 verbunden ist.

Die Reibkraft an der Kontaktstelle zum Bremsträger 4 bewirkt eine elastische Verformung des scharfkantigen Endes 18 der Belagfeder 11 beim Verschieben des äußeren Bremsbelags 3 zur Bremsscheibe hin. Beim Lösen der Schiebesattel-Scheibenbremse 1 bewirkt diese gespeicherte Federkraft einen Rückstellvorgang am Bremsbelag 3. Durch das scharfkantige Ende 18 der Belagfeder 11 ergibt sich eine Erhöhung der Reibung zwischen Belagfeder 11, Bremsbelag 3 und Bremsbelagschachtwandung. Gleiches gilt analog auch für das scharfkantige Ende der Belagfeder 10 (nicht dargestellt).

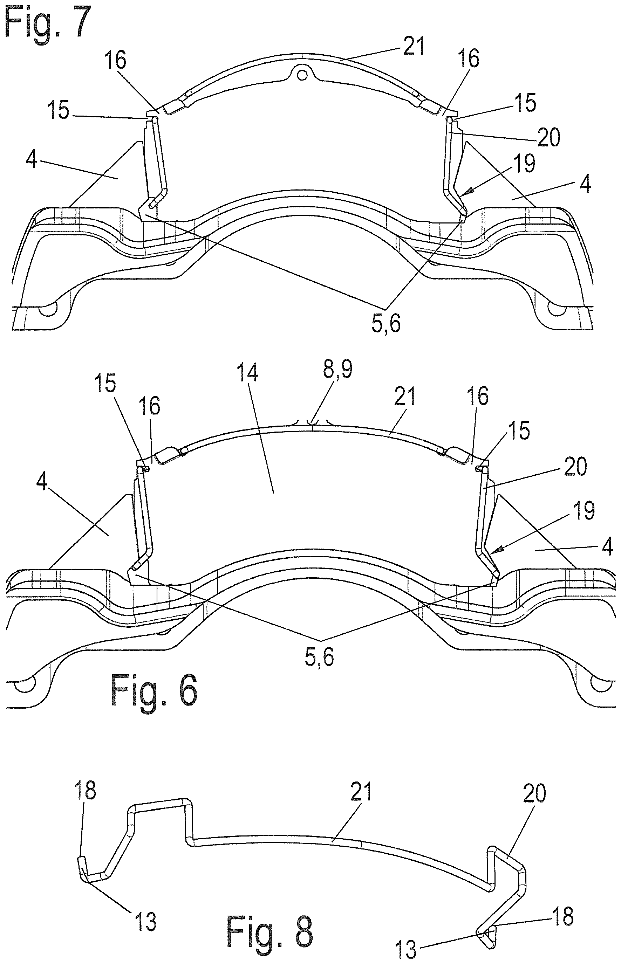

Fig. 6 zeigt die Vorderansicht einer weiteren Ausführungsvariante einer erfindungsgemäßen Bremsbelaganordnung einer Schiebesattel-Scheibenbremse 1 mit montierter Belagfeder 20.

Diese Ausführungsvariante kommt mit nur einer Belagfeder 20 aus. Der äußere Bremsbelag 4 ist wieder in den Bremsträger 4 eingesetzt.

In den unteren Eckbereichen 5 des Bremsbelagaufnahmeschachtes springt der reaktionsseitige äußere Bremsbelag 3 jeweils zurück, so dass sich zwischen Bremsbelagschachtwandung und Bremsbelag 3 eine Ausnehmung 6 ergibt.

Zur Anbindung des reaktionsseitigen Bremsbelags 3 an den Bremssattel 7 (nicht dargestellt) dienen Sicherungsbolzen 8, die mit einem Federstecker 9 gegen Herausziehen gesichert sind. Die runde Querschnittsgeometrie der Belagfeder 20 ist dabei lediglich als rein beispielhaft zu sehen. Andere Geometrien, die zur Ausbildung der Belagfedern geeignet sind, sind für eine erfindungsgemäße Bremsbelaganordnung für eine Schiebesattelbremse ebenso möglich.

In Fig. 6 ist außerdem der Verlauf der Belagfeder 20 am Bremsbelag 2,3 erkennbar.

Die Belagfeder 20 taucht jeweils mit ihren freien Enden 13 in die Ausnehmungen 6 des Belages 3 ein. Durch jeweils eine Biegung wird der Konturverlauf der Belagfeder 10 auf die freie Seite der Trägerplatte 14 des Bremsbelages 3 schräg nach oben geführt und durch jeweils eine weitere Biegung entlang der Bremsmomentabstützfläche B weiter nach oben geführt.

An oberen Ende der Bremsmomentabstützfläche B ist die Belagfeder 20 jeweils wieder durch eine Ausnehmung 15 durch die Trägerplatte 14 geführt, umgreift eine hakenförmige Geometrie 16 der Trägerplatte 14, um dann wieder auf die freie Seite der Trägerplatte 14 geführt zu werden. Der Steg 21 der Belagfeder 20 wird durch die Montage eines Sicherungsbolzens 8 blattfederartig vorgespannt.

In Fig. 7 ist gezeigt, wie das freie Ende 13 der ungespannten Belagfeder 20 in der linken Ausnehmung 6 sitzt, sich jedoch nicht gegen den linken unteren Eckbereich des Bremsbelagaufnahmeschachtes 23 abstützt. Dies wird erst durch das Vorspannen der Belagfeder 20 durch die Montage eines Sicherungsbolzens 8 erreicht (vgl. Fig. 7).

In Fig. 8 ist die Belagfeder 20 dargestellt. Deren freie Enden 13 sind schräg angeformt, so dass die Reibwirkung am den Belagschachtwänden des Bremsträgers 4 erhöht.

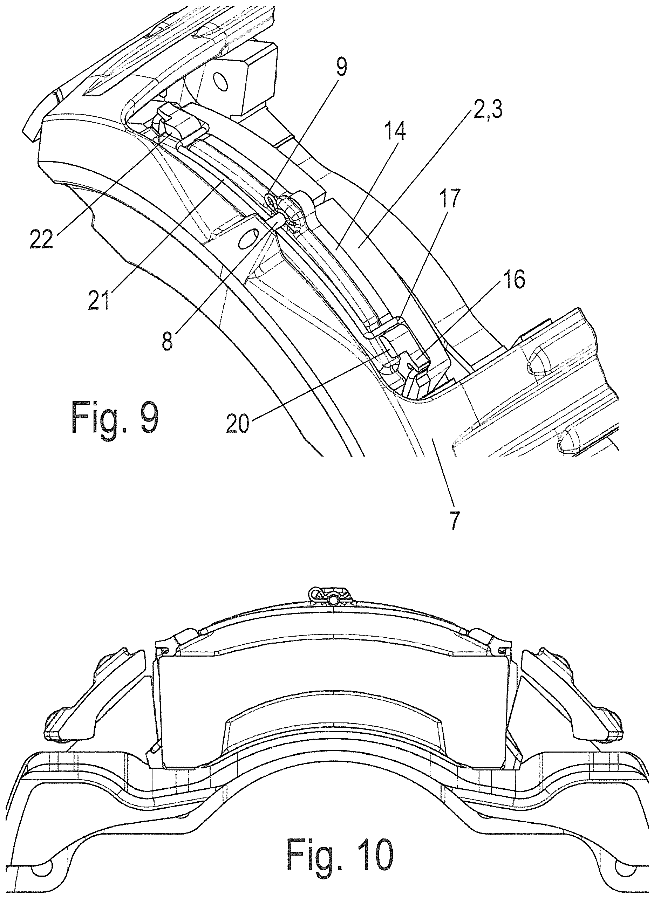

Fig. 9 zeigt die montierte Belagfeder 20. Die Belagfeder 20 ist in ihrem ungespannten Zustand gemäß Fig. 7 nur seitlich um den Bremsbalg herumgeführt. Vorgespannt wird die Belagfeder 20 dadurch, dass die Feder heruntergedrückt wird, so dass der Sicherungsbolzen 8 in seine vorgesehene, in der Symmetrieebene der Bremsbelaganordnung für eine Schiebesattel-Scheibenbremse positionierten Bohrung eingesteckt werden kann und mit einem Federstecker 9 gesichert wird. Durch die Anordnung des Sicherungsbolzens 8 in der Symmetrieebene wird ein maximaler Vorspannweg für den Steg 21 der Belagfeder 20 erreicht, so dass sich insgesamt eine maximal möglicher Vorspannung der Belagfeder 20 ergibt.

Ein separater Spannbügel, der beide Belagfedern vorspannt, ist somit nicht mehrnotwendig. Die Sicherungsbolzen 8 hat dabei eine Zusatzfunktion, er dient auch zum Anbinden des Bremsbelags 3 an den Bremssattel 7. Darüber hinaus weist die Trägerplatte 14 des Bremsbelags 3 im Bereich hakenförmigen Geometrie 16, also an beiden oberen Ecken der Bremsbeläge, jeweils eine Anschlagschulter 22 auf. Mit den Anschlagschultern 22 in Kombination mit dem Sicherungsbolzen 8 wird der Bremsbelag 3 gegen Verdrehen gesichert.

### Bezugszeichenliste

- 1: Bremsträger
- 2: Zuspannseitiger Bremsbelag
- 3: Reaktionsseitiger Bremsbelag
- 4: Bremsträger
- 5: Unterer Eckbereich
- 6: Ausnehmung
- 7: Bremssattel
- 8: Sicherungsbolzen
- 9: Federstecker
- 10: Belagfeder
- 11: Belagfeder
- 12: Öse
- 13: Freies Ende
- 14: Trägerplatte
- 15: Ausnehmung
- 16: Hakenförmige Geometrie
- 17: Bogen
- 18: Scharfkantiges Ende
- 19: Hinterschnitt
- 20: Belagfeder
- 21: Steg
- 22: Anschlagschulter
- 23: Bremsbelagaufnahmeschacht
- 24: Bremsscheibe

## Patentansprüche

1. Bremsbelaganordnung für eine Schiebesattel-Scheibenbremse (1), umfassend einen Bremsträger und einen relativ dazu verschiebbaren Bremssattel, wobei der Bremsträger (4) wenigstens einen zuspannseitigen und einen reaktionsseitigen Bremsbelag (2, 3) in einem jeweiligen Bremsbelagschacht (23) aufnimmt,
wobei die Bremsbeläge (2, 3) an eine Bremsscheibe (24) anlegbar sind, sowie mit wenigstens einer Belagfederanordnung (10, 11, 20), welche eine Verspannung zwischen dem Bremsträger und dem reaktionsseitigen Bremsbelag bewirkt,
wobei wenigstens die Belagfederanordnung (10, 11, 20) des reaktionsseitigen Bremsbelages von einer Umfangsseite des Bremsbelages (3), wo sie zwischen dem Bremsträger (4) und dem Bremsbelag (3) gehalten ist, bis an die Oberseite des Bremsbelages (3) an der von Stützflächen (A) abgewandten offenen Seite des Bremsbelagschachtes (23) geführt ist und an dieser Seite an einem an dem Bremssattel (7) festgelegten oder ausgebildeten Sicherungselement gehalten ist, und
wobei die Belagfederanordnung wenigstens eine Belagfeder (10, 11, 20) aufweist, **dadurch gekennzeichnet,**
**dass** die wenigstens eine Belagfeder (10, 11, 20) mit wenigstens einem freien Ende (13) in eine Ausnehmung (6) im unteren Eckbereich (5) des Bremsbelages (3) eintaucht und dort zwischen der Ausnehmung (6) des Bremsbelags (3) und der Bremsbelagschachtwandung vorzugsweise reibschlüssig festgelegt ist,
**und dass** das an dem Bremssattel festgelegte Element ein Sicherungsbolzen (8), eine Schraube oder ein Splint ist,
wobei die wenigstens eine Belagfeder (10, 11) jeweils mit einer Öse (12) auf jeweils einem Sicherungsbolzen (8), einer Schraube oder einem Splint festgelegt ist und dadurch vorgespannt ist.

2. Bremsbelaganordnung für eine Schiebesattel-Scheibenbremse (1), umfassend einen Bremsträger und einen relativ dazu verschiebbaren Bremssattel, wobei der Bremsträger (4) wenigstens einen zuspannseitigen und einen reaktionsseitigen Bremsbelag (2, 3) in einem jeweiligen Bremsbelagschacht (23) aufnimmt,
wobei die Bremsbeläge (2, 3) an eine Bremsscheibe (24) anlegbar sind, sowie mit wenigstens einer Belagfederanordnung (10, 11, 20), welche eine Verspannung zwischen dem Bremsträger und dem reaktionsseitigen Bremsbelag bewirkt,
wobei wenigstens die Belagfederanordnung (10, 11, 20) des reaktionsseitigen Bremsbelages von einer Umfangsseite des Bremsbelages (3), wo sie zwischen dem Bremsträger (4) und dem Bremsbelag (3) gehalten ist, bis an die Oberseite des Bremsbelages (3) an der von Stützflächen (A) abgewandten offenen Seite des Bremsbelagschachtes (23) geführt ist und an dieser Seite an einem an dem Bremssattel (7) festgelegten oder ausgebildeten Sicherungselement gehalten ist, und
wobei die Belagfederanordnung wenigstens eine Belagfeder (10, 11, 20) aufweist, **dadurch gekennzeichnet,**
**dass** die wenigstens eine Belagfeder (10, 11, 20) mit wenigstens einem freien Ende (13) in eine Ausnehmung (6) im unteren Eckbereich (5) des Bremsbelages (3) eintaucht und dort zwischen der Ausnehmung (6) des Bremsbelags (3) und der Bremsbelagschachtwandung vorzugsweise reibschlüssig festgelegt ist,
**und dass** das an dem Bremssattel festgelegte Element ein Sicherungsbolzen (8), eine Schraube oder ein Splint ist,
wobei die wenigstens eine Belagfeder (20) jeweils durch Niederdrücken eines Steges (21) der wenigstens einen Belagfeder (20) und anschließender Montage eines Sicherungsbolzens (8), einer Schraube oder eines Splints in der Symmetrieebene der Schiebesattel-Scheibenbremse oberhalb des niedergedrückten Steges (21) vorgespannt ist.

3. Bremsbelaganordnung nach Anspruch 1 oder 2, **dadurch gekennzeichnet, dass** die Belagfederanordnung mehrere Belagfedern (10, 11) aufweist.

4. Bremsbelaganordnung nach Anspruch 1, 2 oder 3, **dadurch gekennzeichnet, dass** der Reibschluss durch ein scharfkantiges Ende (18) der Belagfeder (10, 11, 20) verstärkt ist.

5. Bremsbelaganordnung nach einem der vorstehenden Ansprüche, **dadurch gekennzeichnet, dass** der Reibschluss durch ein scharfkantiges Ende (18) der Belagfeder (10, 11, 20) verstärkt ist.

6. Bremsbelaganordnung nach einem der vorgenannten Ansprüche, **dadurch gekennzeichnet, dass** ein freies Ende (13) der wenigstens einen Belagfeder (10, 11, 20) zusätzlich durch einen Hinterschnitt (19) an einer Bremsmomentabstützfläche (B) der Bremsbeläge (3) in der Ausnehmung (6) am unteren Eckbereich (5) des Bremsbelags (3) formschlüssig fixiert wird.

7. Bremsbelaganordnung nach Anspruch 6, **dadurch gekennzeichnet, dass** die wenigstens eine Bremsbelagfeder (10, 11, 20) durch eine Biegung auf die freie Seite einer Trägerplatte (14) des Bremsbelages (3) und dort schräg nach oben geführt wird und durch eine weitere Biegung entlang der Bremsmomentabstützfläche (B) der Bremsbeläge (3) weiter nach oben geführt wird.

8. Bremsbelaganordnung nach einem der Ansprüche 6 oder 7, **dadurch gekennzeichnet, dass** die wenigstens eine Bremsbelagfeder (10, 11, 20) am oberen Ende der Bremsmomentabstützfläche (B) der Bremsbeläge (3) durch eine Ausnehmung (15) durch die Trägerplatte (14) der Bremsbeläge (2,3) geführt wird, sodann eine hakenförmige Geometrie (16) der Trägerplatte (14) umgreift, um dann wieder auf die freie Seite der Trägerplatte (14) geführt zu werden und dass sie im weiteren Konturverlauf entlang der von Stützflächen (A) abgewandten Oberseite des Bremsbelages verläuft.

9. Bremsbelaganordnung nach einem der vorstehenden Ansprüche, **dadurch gekennzeichnet, dass** die Bremsbeläge (3) durch jeweils zwei Belagfedern (10, 11) vorgespannt sind.

10. Bremsbelaganordnung nach einem der Ansprüche 1 bis 8, **dadurch gekennzeichnet, dass** die Bremsbeläge (3) durch jeweils eine Belagfeder (20) vorgespannt ist.

11. Bremsbelaganordnung nach einem der Ansprüche 4 bis 10, **dadurch gekennzeichnet, dass** der reaktionsseitige Bremsbelag (3) durch die Sicherungselemente, insbesondere die Sicherungsbolzen (8), am Bremssattel (7) fixiert und geführt ist.

12. Bremsbelaganordnung für nach einem der vorstehenden Ansprüche, **dadurch gekennzeichnet, dass** die Trägerplatte des reaktionsseitigen Bremsbelags (3) durch Sicherungselemente, wie z.B. Sicherungsbolzen (8) am Bremssattel (7) fixiert und geführt ist.

13. Bremsbelaganordnung nach einem der vorstehenden Ansprüche, **dadurch gekennzeichnet, dass** die wenigstens eine Feder aus einem vorzugsweise runden Federdraht besteht.

## Claims

1. Brake pad assembly for a floating-calliper disc brake (1), comprising a brake carrier and a brake calliper movable relative thereto, wherein the brake carrier (4) accommodates at least one application-side and one reaction-side brake pad (2, 3) in respective brake pad channels (23),
wherein the brake pads (2, 3) can be applied to a brake disc (24), and having at least one anti-rattle spring assembly (10, 11, 20) which causes bracing between the brake carrier and the reaction-side brake pad,
wherein the at least one anti-rattle spring assembly (10, 11, 20) of the reaction-side brake pad is guided from a peripheral side of the brake pad (3), where it is retained between the brake carrier (4) and the brake pad (3), to the top side of the brake pad (3) on the open side of the brake pad channel (23), averted from support surfaces (A), and is retained on this side on a securing element fastened to or formed on the brake calliper (7), and
wherein the anti-rattle spring assembly has at least one anti-rattle spring (10, 11, 20),
**characterised in that** the at least one anti-rattle spring (10, 11, 20) dips with at least one free end (13) into a recess (6) in the bottom corner area (5) of the brake pad (3) and is preferably fastened there by frictional force between the recess (6) of the brake pad (3) and the brake pad channel wall,
**and in that** the element fastened to the brake calliper is a securing bolt (8), a screw or a splint,
wherein the at least one anti-rattle spring (10, 11) is fastened with an eyelet (12) each on a securing bolt (8), a screw or a splint each and thereby pre-loaded.

2. Brake pad assembly for a floating-calliper disc brake (1), comprising a brake carrier and a brake calliper movable relative thereto, wherein the brake carrier (4) accommodates at least an application-side and a reaction-side brake pad (2, 3) in respective brake pad channels (23),
wherein the brake pads (2, 3) can be applied to a brake disc (24), and having at least one anti-rattle spring assembly (10, 11, 20) which causes bracing between the brake carrier and the reaction-side brake pad,
wherein the at least one anti-rattle spring assembly (10, 11, 20) of the reaction-side brake pad is guided from a peripheral side of the brake pad (3), where it is retained between the brake carrier (4) and the brake pad (3), to the top side of the brake pad (3) on the open side of the brake pad channel (23), averted from support surfaces (A), and is retained on this side on a securing element fastened to or formed on the brake calliper (7), and
wherein the anti-rattle spring assembly has at least one anti-rattle spring (10, 11, 20),
**characterised in that** the at least one anti-rattle spring (10, 11, 20) dips with at least one free end (13) into a recess (6) in the bottom corner area (5) of the brake pad (3) and is preferably fastened there by frictional force between the recess (6) of the brake pad (3) and the brake pad channel wall,
**and in that** the element fastened to the brake calliper is a securing bolt (8), a screw or a splint,
wherein the at least one anti-rattle spring (20) is in each case pre-loaded by pressing down a web (21) of the at least one anti-rattle spring (20) and subsequently installing a securing bolt (8), a screw or a splint in the symmetry plane of the floating-calliper disc brake above the pressed-down web (11).

3. Brake pad assembly according to claim 1 or 2, **characterised in that** the anti-rattle spring assembly has several anti-rattle springs (10, 11).

4. Brake pad assembly according to claim 1, 2 or 3, **characterised in that** the frictional engagement is strengthened by a sharp-edged end (18) of the anti-rattle spring (10, 11, 20).

5. Brake pad assembly according to any of the preceding claims, **characterised in that** the frictional engagement is strengthened by a sharp-edged end (18) of the anti-rattle spring (10, 11, 20).

6. Brake pad assembly according to any of the preceding claims, **characterised in that** a free end (13) of the at least one anti-rattle spring (10, 11, 20) is additionally fastened positively by an undercut (19) on a braking torque support surface (B) of the brake pads (3) in the recess (6) at the bottom corner area (5) of the brake pad (3).

7. Brake pad assembly according to any of the preceding claims, **characterised in that** the at least one anti-rattle spring (10, 11, 20) is guided by a curvature onto the free side of a carrier plate (14) of the brake pad (3) and at an upward angle there, and is guided further upwards by a further curvature along the braking torque support surface (B) of the brake pads (3).

8. Brake pad assembly according to claim 6 or 7, **characterised in that** the at least one anti-rattle spring (10, 11, 20) is guided at the upper end of the braking torque support surface (B) of the brake pads (3) through a recess (15) through the carrier plate (14) of the brake pads (2, 3), then engages around a hook-shaped geometry (16) of the carrier plate (14), in order to then be guided again to the free side of the carrier plate (14), and **in that** its further contour extends along the top side, averted from support surfaces (A), of the brake pad.

9. Brake pad assembly according to any of the preceding claims, **characterised in that** the brake pads (3) are preloaded by two anti-rattle springs (10, 11) each.

10. Brake pad assembly according to any of claims 1 to 8, **characterised in that** the brake pads (3) are preloaded by one anti-rattle spring (20) each.

11. Brake pad assembly according to any of claims 4 to 10, **characterised in that** the reaction-side brake pad (3) is fastened and guided by the securing elements, in particular the securing bolts (8), to and on the brake calliper (7).

12. Brake pad assembly according to any of the preceding claims, **characterised in that** the carrier plate of the reaction-side brake pad (3) is fastened and guided by securing elements, e.g. securing bolts (8), to and on the brake calliper (7).

13. Brake pad assembly according to any of the preceding claims, **characterised in that** the at least one spring is composed of a preferably round spring wire.

## Revendications

1. Agencement de garniture de frein pour un frein (1) à disque à étrier coulissant, comprenant un porte-frein et un étrier de frein pouvant coulisser par rapport à celui-ci, le porte-frein (4) recevant au moins une garniture (2) de frein du côté du serrage et une garniture (3) de frein du côté de la réaction, dans un puit (23) respectif de garniture de frein,
les garnitures (2, 3) de frein pouvant être appliquées à un disque (24) de frein, ainsi qu'ayant au moins un agencement (10, 11, 20) de ressort de garniture, qui provoque un serrage entre le porte-frein et la garniture de frein du côté de la réaction,
au moins l'agencement (10, 11, 20) de ressort de garniture de la garniture de frein du côté de la réaction étant guidé par un côté périphérique de la garniture (3) de frein, où il est maintenu entre le porte-frein (4) et la garniture (3) de frein est guidé jusqu'au côté supérieur de la garniture (3) de frein, du côté ouvert, éloigné de la surface (A) d'appui, du puits (23) de la garniture de frein et est maintenu de ce côté, sur un élément de fixation fixé sur l'étrier (7) de frein ou constitué sur celui-ci, et
dans lequel l'agencement de ressort de garniture a au moins un ressort (10, 11, 20) de garniture, **caractérisé**
**en ce que** le au moins un ressort (10, 11, 20) de garniture pénètre par au moins une extrémité (13) libre, dans un évidement (6) de la partie (5) de coin inférieur de la garniture (3) de frein et y est fixé, de préférence à frottement, entre l'évidement (6) de la garniture (3) de frein et la paroi du puit de la garniture de frein,
et **en ce que** l'élément fixé à l'étrier de frein est une goupille (8) de sécurité, une vis ou une goupille fendue,
dans lequel le au moins un ressort (10, 11) de garniture est fixé, respectivement, par un œillet (12) à, respectivement, une goupille (8) de sécurité, une vis ou une goupille fendue et est ainsi précontraint.

2. Agencement de garniture de frein pour un frein (1) à disque à étrier coulissant, comprenant un porte-frein et un étrier de frein pouvant coulisser par rapport à celui-ci, le porte-frein (4) recevant au moins une garniture (2) de frein du côté du serrage et une garniture (3) de frein du côté de la réaction, dans un puit (23) respectif de garniture de frein,
les garnitures (2, 3) de frein pouvant être appliquées à un disque (24) de frein, ainsi qu'ayant au moins un agencement (10, 11, 20) de ressort de garniture,
qui provoque un serrage entre le porte-frein et la garniture de frein du côté de la réaction,
au moins l'agencement (10, 11, 20) de ressort de garniture de la garniture de frein du côté de la réaction étant guidé par un côté périphérique de la garniture (3) de frein, où elle est maintenue entre le porte-frein (4) et la garniture (3) de frein, jusqu'au côté supérieur de la garniture (3) de frein, du côté ouvert, éloigné de surface (A) d'appui, du puit (23) de la garniture de frein et étant maintenu de ce côté, sur un élément de fixation fixé sur l'étrier (7) de frein ou constitué sur celui-ci, et
dans lequel l'agencement de ressort de garniture a au moins un ressort (10, 11, 20) de garniture, **caractérisé**
**en ce que** le au moins un ressort (10, 11, 20) de garniture pénètre par au moins une extrémité (13) libre, dans un évidement (6) de la partie (5) de coin inférieur de la garniture (3) de frein et y est fixé, de préférence à frottement, entre l'évidement (6) de la garniture (3) de frein et la paroi du puit de la garniture de frein,
et **en ce que** l'élément fixé à l'étrier de frein est une goupille (8) de sécurité, une vis ou une goupille fendue,
dans lequel le au moins un ressort (20) de garniture est précontraint, respectivement, en poussant vers le bas une barrette (21) du au moins un ressort (20) de garniture et en montant ensuite une goupille (8) de sécurité, une vis ou une goupille fendue dans le plan de symétrie du frein à disque à étrier coulissant, au-dessus de la barrette (21) poussée vers le bas.

3. Agencement de garniture de frein suivant la revendication 1 ou 2, **caractérisé en ce que** l'agencement de ressort de garniture a plusieurs ressorts (10, 11) de garniture.

4. Agencement de garniture de frein suivant la revendication 1, 2 ou 3, **caractérisé en ce que** la liaison par frottement est renforcée par une extrémité (18) à bord vif du ressort (10, 11, 12) de garniture.

5. Agencement de garniture de frein suivant l'une des revendications précédentes, **caractérisé en ce que** la liaison par frottement est renforcée par une extrémité (18) à bord vif du ressort (10, 11, 20) de la garniture.

6. Agencement de garniture de frein suivant l'une des revendications précédentes, **caractérisé en ce qu'**une extrémité (13) libre du au moins un ressort (10, 11, 20) de la garniture est immobilisée en outre à complémentarité de forme dans l'évidement (6) à la partie (5) de coin inférieur de la garniture (3) de frein, par une contre dépouille (19) sur une surface (B) de soutien du couple de freinage des garnitures (3) de frein.

7. Agencement de garniture de frein suivant la revendication 6, **caractérisé en ce que** le au moins un ressort (10, 11, 20) de la garniture de frein est guidé par un cambrage du côté libre d'une plaque (14) de support de la garniture (3) de frein, et y est guidé de manière inclinée vers le haut et est guidé davantage vers le haut par une autre cambrure, le long de la surface (B) de soutien du couple de freinage des garnitures de frein.

8. Agencement de garniture de frein suivant l'une des revendications 6 ou 7, **caractérisé en ce que** le au moins un ressort (10, 11, 20) de garniture de frein est guidé, à l'extrémité supérieure de la surface (B) d'appui du couple de freinage des garnitures (3) de frein, par un évidement (15), traversant la plaque (14) de support des garnitures (2, 3) de frein, en entourant une géométrie (16) en forme de crochet de la plaque (14) de support, pour être guidé ensuite à nouveau sur le côté libre de la plaque (14) de support et **en ce qu'**il s'étend, suivant un autre tracé de contour, le long du côté supérieur, éloigné de surfaces (A) d'appui, de la garniture de frein.

9. Agencement de garniture de frein suivant l'une des revendications précédentes, **caractérisé en ce que** les garnitures (3) de frein sont précontraintes par respectivement deux ressorts (10, 11) de garniture.

10. Agencement de garniture de frein suivant l'une des revendications 1 à 8, **caractérisé en ce que** les garnitures (3) de frein sont précontraintes par respectivement un ressort (20) de garniture.

11. Agencement de garniture de frein suivant l'une des revendications 4 à 10, **caractérisé en ce que** la garniture (3) de frein du côté de la réaction est immobilisée et est guidée par les éléments de fixation, notamment les goupilles (8) de sécurité, sur l'étrier (7) de frein.

12. Agencement de garniture de frein suivant l'une des revendications précédentes, **caractérisé en ce que** la plaque de support de la garniture (3) de frein du côté de la réaction est immobilisée et guidée sur l'étrier (7) de frein par des éléments de fixation, comme par exemple des goupilles (8) de fixation.

13. Agencement de garniture de frein suivant l'une des revendications précédentes, **caractérisé en ce que** le au moins un ressort est constitué d'un fil métallique de ressort, de préférence de section droite circulaire.
